**Europäisches Patentamt**

(19) **European Patent Office**

**Office européen des brevets**

(11) Veröffentlichungsnummer: **0 037 994**
**B1**

(12) # EUROPÄISCHE PATENTSCHRIFT

(45) Veröffentlichungstag der Patentschrift:
13.11.85

(51) Int. Cl.⁴: **G 21 C 19/08**

(21) Anmeldenummer: **81102555.0**

(22) Anmeldetag: **04.04.81**

(54) Verfahren zum Abführen der Zerfallswärme radioaktiver Substanzen.

(30) Priorität: **15.04.80 DE 3014289**

(43) Veröffentlichungstag der Anmeldung:
**21.10.81 Patentblatt 81/42**

(45) Bekanntmachung des Hinweises auf die Patenterteilung:
**13.11.85 Patentblatt 85/46**

(84) Benannte Vertragsstaaten:
**BE DE FR GB**

(56) Entgegenhaltungen:
**DE - A - 1 514 998**
**DE - A - 1 564 546**
**DE - B - 1 183 605**
**DE - B - 1 271 848**
**DE - B - 1 464 693**
**DE - B - 2 521 269**
**DE - B - 2 823 376**

(73) Patentinhaber: **HOECHST AKTIENGESELLSCHAFT,**
**Postfach 80 03 20, D-6230 Frankfurt am Main 80 (DE)**

(72) Erfinder: **Hesky, Hans, Dr., Eschenau,**
**D-6251 Runkel/Lahn (DE)**
Erfinder: **Wunderer, Armin, Bienerstrasse 10,**
**D-6238 Hofheim am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein Verfahren zum Abführen der Zerfallswärme radioaktiver Substanzen mittels im Kreislauf geführter Flüssigkeit.

Es ist bekannt, die bei der Lagerung abgebrannter Kernbrennstoffe oder deren Folgeprodukte, die bei der Aufarbeitung anfallen, entstehende Wärme durch indirekte Kühlung abzuführen. Sinngemäß gilt das gleiche für den Brennraum und den diesen umgebenden Sicherheitsraum von Kernkraftwerken. Nachteilig bei den bekannten Kühlmethoden ist die Abhängigkeit von störanfälligen Energiequellen, die für den Antrieb der erforderlichen Pumpen, Verdichter, Gebläse und Regler benötigt werden.

Nach der DE-A-1 564 546 ist ein Notkühlsystem für eine Kernreaktoranlage bekannt, bei dem Thermosiphonkreise Verwendung finden, deren Betrieb durch Ventile gesteuert wird.

Aus der DE-B1-2 823 376 ist ein Lager für abgebrannte Kernreaktorbrennelemente bekannt, bei dem die Zerfallswärme über Wärmerohre abgeführt wird. Nachteilig ist, daß ein einzelnes Wärmerohr nur eine begrenzte Wärmemenge abführen kann, so daß für die Abfuhr der Wärme aus einem solchen Lager eine große Anzahl solcher Wärmerohre mit entsprechendem Platzbedarf erforderlich ist. Darüber hinaus ist die Herstellung der Wärmerohre kostspielig.

Die Aufgabe zu vorliegender Erfindung besteht demnach darin, ein Verfahren zu schaffen, mit dem die Zerfallswärme von radioaktiven Substanzen inhärent, d. h. ohne Verwendung bewegter Vorrichtungsteile, wie Pumpen, Gebläse, Verdichter, Regler usw., abgeführt werden kann und mit dem die vorerwähnten Nachteile vermieden werden.

Die Aufgabe wird durch ein Verfahren gelöst, bei dem eine im Kreislauf geführte Flüssigkeit durch die Zerfallswärme teilweise verdampft und die Flüssigkeit im Kreislauf durch das entstandene Flüssigkeitsdampfgemisch angetrieben wird, nach Übersteigen einer dem Druckverlust im Kreislauf entsprechenden statischen Höhe das Flüssigkeitsgemisch in Flüssigkeit und Dampf getrennt, der Dampf kondensiert, das Kondensat mit der abgetrennten Flüssigkeit vereinigt und zur teilweisen Verdampfung zurückgeführt wird.

Es kann von Vorteil sein, die zurückgeführte Flüssigkeit vor dem teilweisen Verdampfen zu kühlen. Der kondensierte Dampf kann vor der Rückführung, d. h. vor dem Vereinigen mit der Flüssigkeit des Kreislaufes, nochmals teilweise verdampft werden, und der Dampf mit Hilfe von inertem Trägergas in die Flüssigkeit eingebracht werden. Ein Teil des Dampfes kann auch durch Waschen des mit Dampf beladenen inerten Trägergasstromes mit der Flüssigkeit und der andere Teil durch anschließendes Kühlen vom inerten Trägergas getrennt werden. Das vom Dampf befreite inerte Trägergas wird zum Beladen mit Dampf in die Verdampfungsstufe zurückgeführt.

Als Flüssigkeit für den Kreislauf kann ein Gemisch aus Flüssigkeiten mit unterschiedlichen Siedepunkten verwendet werden. Insbesondere sollen die Flüssigkeitskomponenten des Gemisches so sein, daß durch Mischen derselben miteinander die Temperatur der Flüssigkeit geändert wird.

Im folgenden wird die Erfindung anhand von lediglich einen Ausführungsweg darstellenden Zeichnungen näher erläutert. Es zeigt

Fig. 1 die inhärente Kühlung eines Kernbrennelementezwischenlagers;

Fig. 2 die inhärente Kühlung eines Kernbrennelementezwischenlagers, bei dem die Behälterwand auf einem weitaus niedrigeren Temperaturniveau, z. B. 20° C, gehalten werden soll als der Lagerinhalt.

Der Kreislauf für die Flüssigkeit wird im wesentlichen aus dem Wärmetauscher (7), dem Steigrohr (1), dem Flüssigkeitsabscheider (8) und den Fallrohren (2) und (6) gebildet. Die Höhendifferenz (17) zwischen dem Ende des Steigrohres (1) und dem Flüssigkeitsspiegel im Flüssigkeitsabscheider (8) ist einstellbar. Im Behälter (13) sind die Brennelemente (14) in Wasser gelagert. Das Wasser dient u. a. als Speicher für die Zerfallswärme. Der Wärmetauscher (7) kann im Behälter (13) angeordnet sein und ist gegen radioaktive Strahlen durch eine Abschirmung (12) geschützt, wodurch eventuelle radiolytische Zersetzung der Kreislaufflüssigkeit vermieden wird.

Im Wärmetauscher (7) wird die Flüssigkeit durch die Zerfallswärme erhitzt, wobei sie teilweise verdampft. Der Dampf wird als Treibmittel für die Flüssigkeit benutzt. Die Förderwirkung des Dampfes ist umso größer, je größer die Querschnittsbeaufschlagung des Steigrohres (1) mit Dampf ist. Da Flüssigkeit und Dampf gemeinsam gefördert werden, trägt zum Wärmetransport sowohl die fühlbare Wärme der Flüssigkeit als auch die latente Verdampfungswärme bei. Im Vergleich zum reinen Thermosiphonbetrieb muß bei Abfuhr gleicher Wärmemengen weniger Flüssigkeit umgewälzt werden. Verwendet man als Flüssigkeit z. B. Ammoniakwasser, so addiert sich zur latenten Verdampfungswärme noch die latente Wärme der Entmischung, was zu einer weiteren Verringerung der Umwälzmenge führt. Durch entsprechende Wahl des Mischungsverhältnisses kann man die Zuordnung von Siedebereich und Druck weitgehend frei bestimmen.

Das Flüssigkeits-Dampfgemisch steigt also im Steigrohr (1) hoch und gelangt in den Flüssigkeitsabscheider (8), wo Dampf und Flüssigkeit getrennt werden. Der abgetrennte Treibdampf wird im Kondensator (9), der durch Leitung (3) mit dem Abscheider (8) verbunden ist, kondensiert, und das Kondensat in die vom Flüssigkeitsabscheider (8) über Fallrohre (2) und (6) zum Wärmetauscher (7) fließende Flüssigkeit über Leitung (4) eingeleitet. Es kann zweckmäßig sein, insbesondere dann, wenn durch das Einleiten und Mischen des Kondensates mit der Flüssigkeit die Temperatur sich ändert, in das Fallrohr (6) einen Kühler (10) anzuordnen. Kühler (10) und Kondensator (9) können dabei in einer Art Kamin (16) angeordnet sein. Durch die Wärmeabgabe von Kondensator und Kühler an die Luft entsteht ein natürlicher Zug im Kamin. Zur Steigerung der Zugwirkung im Kamin (16) kann der Kondensator (9) tiefer gesetzt werden. Um zu verhindern, daß der tiefer gelegte Kondensator (9) über Leitung (4) geflutet wird, kann an der Stelle (18) eine Strahlpumpe in Leitung (2) angeordnet werden. Betreibt man dieses System mit einem Zweistoffgemisch, so fließt an der Stelle (18) über Leitung (4) die leichter siedende Komponente des Gemisches in die Flüssigkeit von Leitung (2). An der Stelle (18) kann dadurch Mischungswärme freigesetzt werden. Eine solche Temperaturerhöhung fördert den Wärmeübergang im Kühler (10) an den Luftstrom (15).

Die Höhendifferenz (17) zwischen dem Kreislauf des Steigrohres (1) und dem Flüssigkeitsspiegel im Flüssigkeitsabscheider (8) ist einstellbar. Damit ist es möglich, die Temperatur im Lagerbehälter einzustellen, bei deren Ereichen gekühlt werden soll. Erst wenn die Dampfentwicklung im Wärmetauscher (7) groß genug ist, um die Höhendifferenz (17) zu überwinden, kann die Flüssigkeitsumwälzung stattfinden. Es kann zweckmäßig sein, hier zur schärferen Blockierung der Umwälzung unterhalb einer gewünschten Temperatur, dort eine gewisse Menge Inertgas zuzuführen.

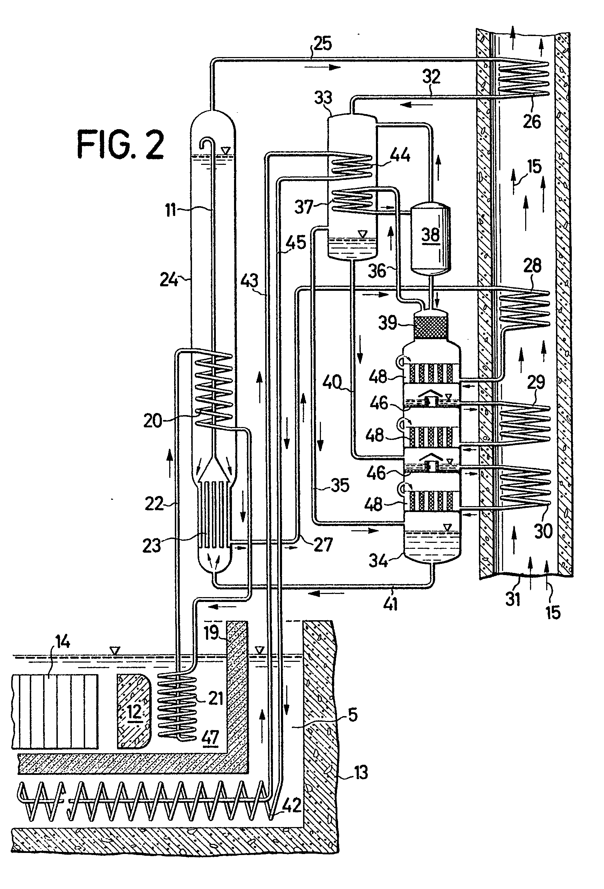

Mit einer Anlage gemäß Fig. 2, die beispielsweise 1 MW leistet und deren Betriebsdruck $5.10^5$ Pa beträgt, soll die Zerfallswärme, die bei der Brennelementlagerung entsteht, abgeführt werden. Dabei soll das Wasser, das mit den Brennelementen unmittelbar in Berührung steht, auf einer Temperatur von etwa 65° C, die Behälterwand (13) von diesem Wasser durch ein wärmedämmendes Diaphragma (19) getrennt, auf einer Temperatur von ca. 30° C gehalten werden. Nach dem gleichen Verfahren kann auch die Wärme, die durch eine wärmedämmende Abdeckung der warmen Wasseroberfläche in den den Lagerbehälter umgebenden Raum, z. B. die Lagerhalle, eindringt, abgeführt werden.

Der Behälter (13) ist bei diesem Beispiel durch ein Diaphragma (19) aus Glaswolle od. dgl. um einen die Brennelemente (14) enthaltenden Raum (47) und einen diesen umgebenden Raum (5) unterteilt. Das Diaphragma (19) erlaubt einen Niveauausgleich des Wassers auf beiden Seiten des Diaphragmas, verhindert jedoch turbulente Strömung des Wassers von Raum (47) zu Raum (5) und wirkt so als Wärmedämmung.

Durch Thermosiphonwirkung werden eine Wärmemenge Qw von 0,63 MW aus dem wärmeren Teil des Brennelementelagers mit einer Wärmeträgerflüssigkeit abgeführt und durch indirekten Wärmetausch im Wärmetauscher (20) zum teilweisen Verdampfen der Flüssigkeit und zum Antrieb einer Mammutpumpe (11) verwendet. Die Wärmeträgerflüssigkeit, z. B. Wasser, wird durch die Zerfallswärme über Wärmetauscher (21) auf 63° C erhitzt und gelangt über Steigrohr (22) in den Wärmetauscher (20). Der Wärmetauscher (20) ist Teil einer Blasenabtriebskolonne (24). Die Flüssigkeit, ein Zweistoffgemisch (z. B. Ammoniak-Wasser), wird durch Kontakt mit den Wärmetauschern (20) und (23) auf 60° C erhitzt und teilweise (ca. 10%) verdampft. Der Dampf treibt die Mammutpumpe (11) an. Am Kopf der Blasenabtriebskolonne wird die Flüssigkeit wieder abgetrennt und der Dampf, das ist die leichter siedende Komponente, über Leitung (25) dem Kondensator (26) zugeleitet. Die an leichter siedende Komponente auf 35% $NH_3$ abgereicherte Flüssigkeit verläßt nach Durchlaufen der Wärmetauscher (20) und (23) die Blasenabtriebskolonne (24) und gelangt von dort über Leitung (27) in den Luftwärmetauscher (28) des Kamines (31).

Das den Kondensator (26) verlassende Kondensat 1,330 t/h mit 99% $NH_3$ gelangt über Leitung (32) in einen Verdampfer (33), wo es in geeigneter Form mit einem im Kreislauf über Absorberkolonne (34) geführten Strom leichten Trägergases, z. B. 440 Nm³/h Wasserstoff oder Helium, in Berührung gebracht wird. Im Verdampfer (33) verdampft die leichter siedende Komponente zu etwa 97% und vermischt sich mit dem Trägergas, so daß ein spezifisch schwereres Gemisch entsteht, das über Fallrohr (35) in den anderen Teil der Absorberkolonne (34) gelangt. Im Absorber (34) wird das Trägergas mit der die Blasenabtriebskolonne (24) verlassenden Flüssigkeit gewaschen.

Vom Luftkühler (28) gelangt die an leichter siedender Komponente abgereicherte Flüssigkeit (11,8 t/h) in die Absorberkolonne (34), in welcher sie in geeigneter Weise über die Einbauten (48) mit dem im Gegenstrom fließenden Trägergas in Berührung gebracht wird. Hierbei übernimmt die abgereicherte Flüssigkeit in bekannter Weise aus dem Trägergas die leichter siedende Komponente, worauf das Trägergas, von ihr entladen, leichter wird und durch die Leitung (36) zum Verdunster (33) zurückströmt. Dort tritt es über die Austauschflächen (37) in indirekten Wärmetausch mit abwärts strömendem Gemisch aus Trägergas, angereichert durch leichter siedende Komponente und flüssigen Resten des an schwer siedendem angereicherten Kondensats. Gegen diesen Strom wird das Trägergas im Austauscher (37) weiter abgekühlt, so daß jetzt der größte Teil der noch in ihm enthaltenen Dampfreste des Gemisches (160 kg/h) auskondensiert. Diese werden im Abscheider (38) abgeschieden und fließen als Rücklauf zu einer Packung (39), wo sie im Gegenstrom zum Trägergas in direktem Austausch zu dem den Absorber (34) am Kopf verlassenden Trägergas stehen. Dadurch erfolgt ein Wärme- und Stoffaustausch, wobei letzterer die Konzentration an Dämpfen der schwer siedenden Komponente im Verhältnis zu denen der leicht siedenden herabsetzt und so erreicht wird, daß im Verdampfer (33) der größte Teil des Kondensates verdampft, was den Wirkungsgrad der Anlage erheblich steigert. Über Leitung (40) wird der Rest des Kondensates aus dem Verdampfer (33) an geeigneter Stelle dem Absorber (34) zugeführt. Die Flüssigkeit, das Zweistoffgemisch (13,2 t/h mit 41% NH₃ verläßt die Absorberkolonne (34) über Leitung (41) und gelangt in die Blasenabtriebskolonne (24). Neben dem Luftwärmetauscher (28) können weitere Luftwärmetauscher (29) und (30) im Flüssigkeitskreislauf angeordnet sein. (46) deutet Zwischenböden für die Flüssigkeit an.

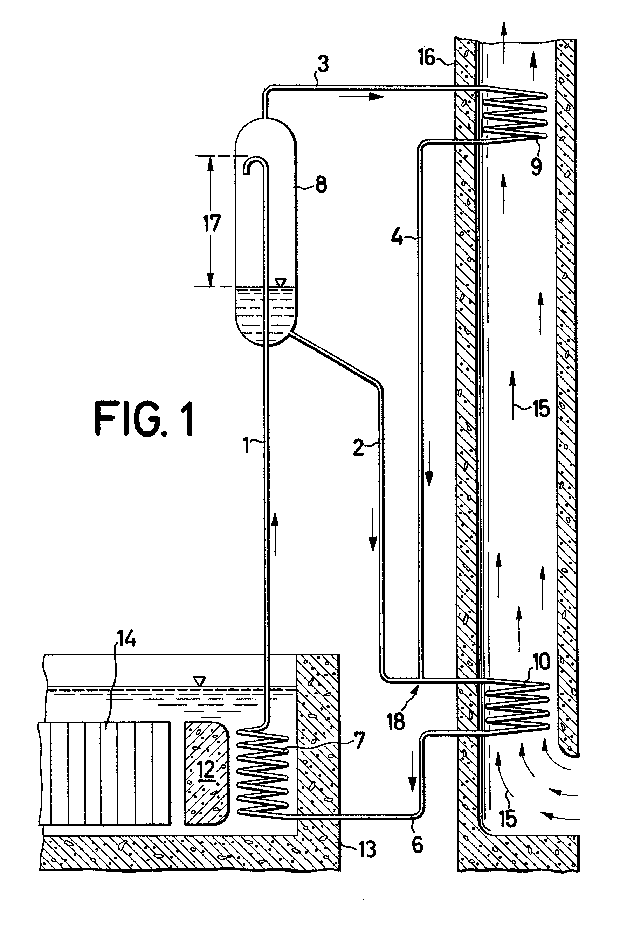

Die Verdampfungswärme für den Verdampfer (33) kann dem Raum (5) entnommen werden, in den 0,37 MW der Zerfallswärme über die Wärmedämmung eingedrungen ist. Im Raum (5) ist dazu ein Wärmetauscher (42) installiert. Von dort gelangt das Wärmetauschermedium über die Leitung (43) zum Wärmetauscher (44) des Verdampfers (33). Der Rücklauf erfolgt über die Leitung (45). Dieser Wärmetransport kann, wie in Fig. 1 dargestellt, durch eine Mammutpumpe mit Höhenunterschied geregelt werden. Wenn gewünscht, kann auf diese Weise der Wärmetransport vom Raum (5) zum Verdampfer (33) weitgehend zum Erliegen gebracht werden. Die im Kondensator (26) verflüssigten Dämpfe aus der Blasenabtriebskolonne (24) passieren praktisch unvermindert den Verdunster (33), wobei sich dort Temperaturen einstellen, bei denen das nur schwach beladene Trägergas das gleiche spezifische Gewicht hat, wie das dann zwar wärmere, aber auch mehr beladene Trägergas aus dem Absorber, so daß der Trägerkreislauf ebenfalls zum Erliegen kommt. Das Kondensat läuft praktisch vollständig über die Leitung (40) der Absorberkolonne (34) zu, so daß sich ein Fahrzustand einstellt, der völlig der Fahrweise gemäß Fig. 1 entspricht. Die Wärme wird aus der warmen Zone (Raum 47) allein abgeführt.

**Patentansprüche**

1. Verfahren zum Abführen der Zerfallswärme radioaktiver Substanzen mittels im Kreislauf geführter Flüssigkeit, dadurch gekennzeichnet, daß

a) die Flüssigkeit durch die Zerfallswärme teilweise verdampft und die Flüssigkeit im Kreislauf durch das entstandene Flüssigkeitsdampfgemisch angetrieben wird,

b) nach Übersteigen einer dem Druckverlust im Kreislauf entsprechenden statischen Höhe das Flüssigkeitsdampfgemisch in Flüssigkeit und Dampf getrennt,

c) der Dampf kondensiert,

d) das Kondensat mit der abgetrennten Flüssigkeit vereinigt und zur teilweisen Verdampfung zurückgeführt wird.

2. Verfahren nach Anspruch 1, dadurch gekennzeichnet, daß die Flüssigkeit vor dem teilweisen Verdampfen gekühlt wird.

3. Verfahren nach Anspruch 1, dadurch gekennzeichnet, daß der kondensierte Dampf vor Rückführung in die Flüssigkeit des Kreislaufes wieder teilweise verdampft und der Dampf durch inertes Trägergas in die Flüssigkeit eingebracht wird.

4. Verfahren nach Anspruch 3, dadurch gekennzeichnet, daß ein Teil des Dampfes durch Waschen des mit Dampf beladenen inerten Trägergases mit der Flüssigkeit und der andere Teil durch anschließendes Kühlen vom inerten Trägergas abgetrennt wird und das vom Dampf befreite inerte Trägergas zum Beladen mit Dampf in die teilweise Verdampfung zurückgeführt wird.

5. Verfahren nach den Ansprüchen 1 bis 4, dadurch gekennzeichnet, daß als Flüssigkeit für den Kreislauf ein Gemisch aus Flüssigkeiten mit unterschiedlichen Siedepunkten verwendet wird.

6. Verfahren nach Anspruch 5, dadurch gekennzeichnet, daß Flüssigkeitskomponenten verwendet werden, die durch Mischen miteinander die Temperatur der Flüssigkeit verändern.

**Claims**

1. A process for carrying away the decay heat of radioactive substance by means of a circulating liquid, wherein

a) some of the liquid is vaporized by the decay heat and the liquid in the circuit is driven by the mixture of liquid and vapor which has formed,

b) after exceeding a static head corresponding to the pressure drop in the circuit, the mixture of liquid and vapor is separated into liquid and vapor,

c) the vapor is condensed, and

d) the condensate is combined with the liquid which has been separated off and is recycled to the partial vaporization.

2. A process as claimed in claim 1, wherein the liquid is cooled before some of it is vaporized.

3. A process as claimed in claim 1, wherein some of the condensed vapor is vaporized again before being recycled to the liquid in the circuit, and vapor is introduced into the liquid by means of inert carrier gas.

4. A process as claimed in claim 3, wherein a portion of the vapor is separated off by scrubbing the vapor-laden inert carrier gas, using the liquid, and the other portion is separated off by subsequently cooling the inert carrier gas, and the inert carrier gas, which has been stripped of vapor, is recycled to the partial vaporization in order to be laden with vapor.

5. A process as claimed in claims 1 to 4, wherein a mixture of liquids having different boiling points is used as the fluid for the circuit.

6. A process as claimed in claim 5, wherein use is made of liquid components which on being mixed with one another alter the temperature of the liquid.

## Revendications

1. Procédé pour l'évacuation de la chaleur résiduelle de substances radio-actives au moyen d'un liquide envoyé en circuit fermé, caractérisé en ce que

a) le liquide est vaporisé partiellement par la chaleur résiduelle et le liquide est refoulé dans le circuit fermé par le mélange liquide-vapeur formé,
b) après dépassement d'une hauteur statique correspondant à la perte de pression dans le circuit fermé, le mélange liquide-vapeur est séparé en liquide et vapeur,
c) la vapeur se condense,
d) le condensat est réuni au liquide séparé, et renvoyé à la vaporisation partielle.

2. Procédé selon la revendication 1, caractérisé en ce que le liquide est refroidi avant la vaporisation partielle.

3. Procédé selon la revendication 1, caractérisé en ce que la vapeur condensée avant le renvoi dans le liquide du circuit fermé est à nouveau partiellement vaporisée et la vapeur est introduite par un gaz porteur inerte dans le liquide.

4. Procédé selon la revendication 3, caractérisé en ce qu'une partie de la vapeur est séparée du gaz porteur inerte par lavage du gaz porteur inerte chargé de vapeur avec le liquide et l'autre partie par refroidissement ultérieur du gaz porteur inerte, et le gaz porteur inerte débarrassé de la vapeur est renvoyé à la vaporisation partielle pour être chargé de vapeur.

5. Procédé selon les revendications 1 à 4, caractérisé en ce qu'on utilise comme liquide pour le circuit fermé un mélange de liquides ayant des points d'ébullition différents.

6. Procédé selon la revendication 5, caractérisé en ce que l'on utilise des constituants de liquide qui modifient par mélange entre eux la température du liquide.

FIG. 1

# FIG. 2